# EUROPÄISCHE PATENTANMELDUNG

(11) **EP 3 276 797 A1**
(43) Veröffentlichungstag der Anmeldung: **31.01.2018**
(21) Anmeldenummer: 16181012.2
(22) Anmeldetag: 25.07.2016
(51) Int. Cl.: H02K 1/28, H02K 1/24, H02K 19/14, B63H 21/00

(54) **ROTOR FÜR EINE ELEKTRISCHE ROTIERENDE MASCHINE**

(71) Anmelder: Siemens Aktiengesellschaft, 80333 München (DE)
(72) Erfinder: Ade, Michael, 13503 Berlin (DE)

(57) **Zusammenfassung**

Die Erfindung betrifft einen Rotor (3) für eine elektrische rotierende Maschine (1), welcher eine Welle (5) und ein die Welle (5) umgebendes Rotorelement (8) aufweist. Um eine, im Vergleich zum Stand der Technik, einfachere und kostengünstigere Montage zu ermöglichen, wird vorgeschlagen, dass das Rotorelement (8) mindestens zwei Rotorelementsektoren (9, 10) umfasst, wobei die Rotorelementsektoren (9, 10) miteinander verbunden sind und wobei durch die Verbindung der Rotorelementsektoren (9, 10) eine kraftschlüssige Verbindung zwischen dem Rotorelement (8) und der Welle (5) herstellt wird.

## Beschreibung

Die Erfindung betrifft einen Rotor für eine elektrische rotierende Maschine, welcher eine Welle und ein die Welle umgebendes Rotorelement aufweist.

Die Erfindung betrifft darüber hinaus eine elektrische rotierende Maschine mit einem derartigen Rotor.

Ferner betrifft die Erfindung ein Schiff mit mindestens einer derartigen elektrischen rotierenden Maschine.

Die Erfindung betrifft außerdem ein Verfahren zur Herstellung eines derartigen Rotors.

Eine derartige elektrische rotierende Maschine, beispielsweise ein Motor oder ein Generator, kommt insbesondere im Schiffsbau vor und ist bevorzugt als Booster-Antrieb für Schiffe mit einer Leistung von mindestens einem Megawatt ausgeführt. Eine derartige elektrische rotierende Maschine weist einen Rotor auf, welcher um eine Rotationsachse drehbar ist.

Ein in der Praxis auftretendes Problem derartiger Elektrogroßantriebe besteht darin, dass für die Montage des Rotors auf der üblicherweise langen und schweren Propellerwelle ein hoher Kosten- und Logistikaufwand notwendig ist. Die einzelnen Komponenten des Rotors werden oftmals an verschiedenen Fertigungsstandorten, zu welchen beispielsweise eine Elektromotorenfabrik gehören, hergestellt und dann zu einem anderen Standort transportiert, an welchem ein Zusammenbau der Komponenten erfolgt. Dabei fallen hohe Kosten für den Transport der einzelnen Komponenten an. Weiterhin ist am Ort des Zusammenbaus der Komponenten, beispielsweise auf einer Werft, geschultes Personal für eine derartige Anpassfertigung erforderlich, was ebenfalls hohe Kosten verursacht. Bislang wurde ein Rotorelement auf die glatte, lange und schwere Welle aufgeschrumpft und anschließend wurden die Pole montiert.

Der Erfindung liegt die Aufgabe zugrunde, einen Rotor für eine elektrische rotierende Maschine anzugeben, welcher, im Vergleich zum Stand der Technik, einfacher und kostengünstiger gefertigt werden kann.

Diese Aufgabe wird erfindungsgemäß durch einen Rotor der eingangs genannten Art gelöst, wobei das Rotorelement mindestens zwei Rotorelementsektoren umfasst, wobei die Rotorelementsektoren miteinander verbunden sind und wobei durch die Verbindung der Rotorelementsektoren eine kraftschlüssige Verbindung zwischen dem Rotorelement und der Welle herstellt wird.

Darüber hinaus wird die Aufgabe erfindungsgemäß durch eine elektrische rotierende Maschine mit einem derartigen Rotor gelöst.

Ferner wird die Aufgabe erfindungsgemäß durch ein Schiff mit mindestens einer derartigen elektrischen rotierenden Maschine gelöst.

Außerdem wird die Aufgabe erfindungsgemäß durch ein Verfahren zur Herstellung eines derartigen Rotors gelöst.

Die in Bezug auf den Rotor nachstehend angeführten Vorteile und bevorzugten Ausgestaltungen lassen sich sinngemäß auf die elektrische rotierende Maschine, das Schiff und das Herstellungsverfahren übertragen.

Die Erfindung basiert auf der Idee, die Montage des Rotors durch eine, im Vergleich zum Stand der Technik, alternative Schnittstelle zwischen den Aktivteilen des Rotors, insbesondere Pole für einen Synchronläufer oder einen Kurzschlusskäfig für einen Asynchronläufer, und der Welle zu vereinfachen. Eine derartige Schnittstelle ist das Rotorelement, welches beispielsweise als Polrad ausgebildet ist. Auf dem Rotorelement, welches kraftschlüssig, insbesondere reibschlüssig, mit der Welle verbunden ist, sind die Aktivteile des Rotors montiert. Um die Montage zu vereinfachen, ist das insbesondere um eine Mantelfläche der Welle herum angeordnete Rotorelement in mindestens zwei separate Rotorelementsektoren aufgeteilt, welche miteinander verbunden sind, wobei durch die Verbindung der Rotorelementsektoren eine Verspannung zwischen dem Rotorelement und der Welle entsteht und auf diese Weise das Rotorelement mit der Welle drehfest verbunden ist. Durch eine derartige Verbindung des segmentierten Rotorelements mit der Welle können die fertig montierten Aktivteile einfach und schnell mit der Welle kraftschlüssig verbunden werden, wodurch, im Vergleich zum Stand der Technik, Kosten bei der Fertigung eingespart werden und der Rotor schneller geliefert werden kann.

In besonders vorteilhafter Weise ist die kraftschlüssige Verbindung als Klemmverbindung ausgebildet. Eine Klemmverbindung ist insbesondere eine über den Umfang der Welle ungleichmäßig verteilte Flächenpressung. Eine Klemmverbindung ist einfach und kostengünstig herzustellen, aber auch leicht zu justieren.

In einer bevorzugten Ausführungsform sind die Rotorelementsektoren lösbar miteinander verbunden. Eine lösbare Verbindung zwischen den Rotorelementsektoren wird insbesondere durch Schrauben hergestellt, wobei der Rotor durch die lösbare Verbindung leichter und kostengünstiger gewartet oder ausgetauscht werden kann.

Bei einer weiteren vorteilhaften Ausgestaltung sind die mindestens zwei Rotorelementsektoren über Verbindungselemente miteinander verbunden. Die Verbindungselemente sind beispielsweise als Schrauben ausgeführt. Die Schrauben stellen insbesondere eine ungleichmäßig verteilte Flächenpressung her, wobei der Anpressdruck der ungleichmäßig verteilten Flächenpressung für die kraftschlüssige Verbindung des Rotorelements mit der Welle durch die Schrauben mit geringem Aufwand justiert werden kann.

In besonders vorteilhafter Weise ist zwischen den Rotorelementsektoren ein Spalt ausgebildet. Der Spalt bietet insbesondere Spielraum zum justieren des Anpressdrucks der Klemmverbindung.

Vorteilhaft weist der Spalt eine Breite von 1 bis 5 mm auf. Durch eine derartige Spaltbreite bleibt genügend Spielraum zum justieren des Anpressdrucks und die Leistung und Effizienz des Rotors insbesondere beim Betrieb in einer elektrischen rotierenden Maschine, bleiben, im Vergleich zur Ausgestaltung ohne den Spalt, nahezu unverändert.

Zweckdienlicherweise ist jeder Rotorelementsektor unmittelbar mit der Welle kontaktiert. Erfahrungsgemäß hat sich eine derartige direkte Kontaktierung als besonders vorteilhaft erwiesen.

In einer bevorzugten Ausführungsform weisen zumindest ein Rotorelementsektor und/oder die Welle Mittel zur Herstellung einer formschlüssigen Verbindung zwischen dem Rotorelement und der Welle auf. Durch eine zusätzliche formschlüssige Verbindung wird das Rotorelement mit geringem Mehraufwand fester auf der Welle fixiert und ein Verdrehen auf der Welle ausgeschlossen.

In besonders vorteilhafter Weise sind die Mittel zur Herstellung der formschlüssigen Verbindung zwischen dem Rotorelement und der Welle als Profilierungen ausgebildet. Eine derartige Profilierung bedarf keiner zusätzlichen Verbindungselemente. Daher ist der Rotor einfach und kostengünstig herzustellen.

Vorteilhaft weist der Rotorelementsektor eine erste Profilierung auf und die Welle weist eine zweite Profilierung auf, wobei die erste Profilierung formschlüssig auf der korrespondierenden zweiten Profilierung aufliegt. Insbesondere weisen die Profilierungen mindestens eine Erhöhung und eine korrespondierende Vertiefung auf, welche frei dimensioniert sind. Durch die beiden zueinander passenden Profilierungen wird eine zusätzliche formschlüssige Kraftübertragung erreicht.

Bei einer weiteren vorteilhaften Ausgestaltung weist jeder Rotorelementsektor zumindest einen Pol eines Synchronläufers auf. Der Pol umfasst, je nach Läufertopologie, eine Spule oder einen Permanentmagneten. Insbesondere weist der Rotor Einzelpole oder Schenkelpole auf. Durch eine derartige Läuferarchitektur können die Spulen oder Permanentmagneten, gemäß mechanischer und elektrischer Anforderungen, mit wenigen Schraubverbindungen und elektrischen Verbindungen auf den Rotorelementsektoren angeordnet werden. Insbesondere eine Variation der Polpaarzahl ist mit einem geringen Aufwand realisierbar.

In einer bevorzugten Ausführungsform ist jeweils mindestens ein Pol über eine Flanschverbindung mit einem Rotorelementsektor verbunden. Eine derartige Flanschverbindung ist sowohl robust als auch zerstörungsfrei lösbar. Ferner findet eine gleichmäßige Kraftübertragung zwischen den Polen und der Welle statt. Über den Flansch lassen sich Synchronläufer mit verschiedenen Polen, insbesondere mit Spulen oder Permanentmagneten, ohne Veränderungen an der Welle oder dem Rotorelement, realisieren. Dies führt zu einer Reduzierung des Engineeringaufwands.

Bei einer weiteren vorteilhaften Ausgestaltung weist jeder Rotorelementsektor einen Teil eines Käfigs eines Asynchronläufers auf. Der Käfig, welcher auch Kurzschlusskäfig genannt wird, ist insbesondere direkt oder über einen Flansch mit dem Rotorelement verbunden. Daraus ergibt sich eine Vielzahl an Variationsmöglichkeiten für den Rotor, welche mit einem geringen Aufwand realisierbar sind.

Vorteilhaft weist die Welle an mindestens einem axialen Ende einen Flansch auf, wobei ein Flanschdurchmesser größer als ein Außendurchmesser der Welle ist. Der Flanschdurchmesser ist insbesondere 1,2 bis 1,4 Mal größer als der Außendurchmesser der Welle. Durch den Flansch kann eine belastbare Verbindung zwischen der Welle und einem mit der Welle über den Flansch verbundenen Objekt, beispielsweise eine Welle für einen Propeller, insbesondere über Schrauben, hergestellt werden.

In besonders vorteilhafter Weise sind die Welle und der mindestens eine Flansch aus einem Stück gefertigt. Beispielsweise ist die Welle mit insbesondere beidseitig angeordneten Flanschen aus einem Stück gedreht und anschließend nachbearbeitet. Durch die einstückige Ausführung ist die Welle auch bei sehr hoher Beanspruchung, beispielsweise bei hohen Drehmomenten und/oder schnellen Drehmomentänderungen, sehr stabil.

In einer weiteren Ausführungsform ist der mindestens eine Flansch unlösbar fest mit der Welle verbunden. Beispielsweise wird der mindestens eine Flansch mit einem Schrumpfverfahren mit der Welle verbunden, sodass eine unlösbar feste Verbindung zwischen der Welle und dem Flansch entsteht. Durch die unlösbar feste Verbindung ist die Welle auch bei sehr hoher Beanspruchung, beispielsweise bei hohen Drehmomenten und/oder schnellen Drehmomentänderungen, sehr stabil.

In einer weiteren vorteilhaften Ausgestaltung weist das Schiff einen Propeller mit einer Propellerwelle und eine Hauptmaschine mit einer Hauptmaschinenwelle auf, wobei die elektrische rotierende Maschine an einer Antriebsseite über einen Flansch mit der Propellerwelle des Propellers verbunden ist und an einer Nichtantriebsseite über einen Flansch mit der Hauptmaschinenwelle der Hauptmaschine verbunden ist. Die beidseitig angeordneten Flansche der elektrischen rotierenden Maschine sind vorteilhaft, da diese so flexibel im Antriebsstrang des Schiffes eingefügt werden kann.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: einen Querschnitt einer ersten Ausführungsform eines Rotors,
- FIG 3: einen Querschnitt einer zweiten Ausführungsform eines Rotors,
- FIG 4: einen Querschnitt einer dritten Ausführungsform eines Rotors,
- FIG 5: einen Längsschnitt einer vierten Ausführungsform eines Rotors,
- FIG 6: einen Querschnitt einer fünften Ausführungsform eines Rotors und
- FIG 7: ein Schiff mit einer elektrischen rotierenden Maschine.

Gleiche Bezugszeichen haben in den verschiedenen Figuren die gleiche Bedeutung.

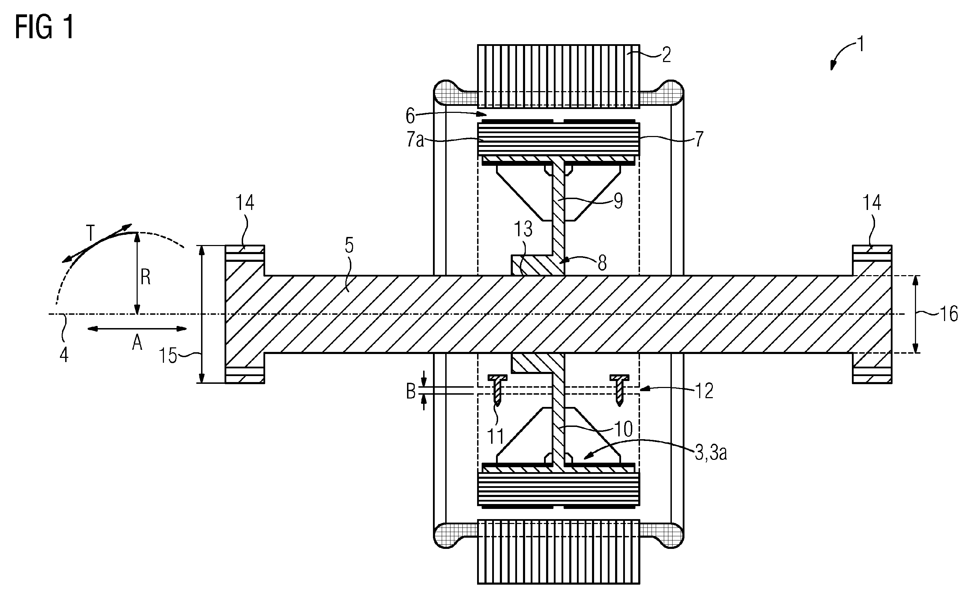

FIG 1 zeigt einen Längsschnitt einer elektrischen rotierenden Maschine 1, welche als Synchronmaschine 1a ausgeführt ist. Die Synchronmaschine 1a ist mit einer Leistung von mindestens 1 Megawatt betreibbar. Sie weist einen Stator 2 und Rotor 3 auf, wobei der Rotor 3 als Synchronläufer 3a ausgebildet und um eine Rotationsachse 4 rotierbar ist. Der Rotor umfasst außerdem eine Welle 5, welche vorzugsweise aus Stahl besteht. Durch die Rotationsachse 4 wird eine axiale Richtung A, eine radiale Richtung R und eine tangentiale Richtung T definiert. Der Stator 2 ist um den Rotor 3 herum angeordnet, wobei sich zwischen dem Stator 2 und dem Rotor 3 ein Fluidspalt 6 befindet. Der Fluidspalt 6 ist als Luftspalt ausgebildet, es können sich aber auch andere Fluide im Fluidspalt 6 zwischen dem Stator 2 und dem Rotor 3 befinden. Der Rotor 3 weist mindestens zwei Pole 7 auf, wobei die Pole über ein Rotorelement 8 drehfest mit der Welle 5 verbunden sind. Die Pole 7 weisen Rotorwicklungen 7a für den Betrieb in einer elektrisch erregten Synchronmaschine 1a auf. Die Spulen 7a bestehen aus Kupfer. Eine Ausgestaltung mit Permanentmagnete 7b aufweisenden Polen 7 mit für den Betrieb in einer permanenterregten Synchronmaschine 1a ist ebenfalls ein Gegenstand der Erfindung.

Das Rotorelement 8 weist exemplarisch zwei Rotorelementsektoren 9, 10 auf, wobei jeder Rotorelementsektor 9, 10 unmittelbar mit der Welle 5 kontaktiert ist. Die Rotorelementsektoren 9, 10 sind bevorzugt aus Stahl gefertigt. Darüber hinaus sind die Rotorelementsektoren 9, 10 über als Schrauben ausgeführte Verbindungselemente 11 lösbar miteinander verbunden. Die mindestens zwei Rotorelementsektoren 9, 10 sind bevorzugt identisch ausgeführt. Zwischen den Rotorelementsektoren 9, 10 befindet sich ein Spalt 12 mit einer Breite B von 1 bis 5 mm. Durch das Verschraubung der Rotorelementsektoren 9, 10 um die Welle 5 wird eine kraftschlüssige Verbindung 13 zwischen dem Rotorelement 8 und der Welle 5 herstellt wird. Diese kraftschlüssige Verbindung 13 ist als Klemmverbindung ausgebildet, wobei die Klemmverbindung eine über den Umfang der Welle ungleichmäßig verteilte Flächenpressung ist. Der Anpressdruck der Rotorelementsektoren 9, 10 auf die Welle 5 kann über die Verbindungselemente 11 variiert werden.

Die Welle weist an ihren beiden axialen Enden jeweils einen Flansch 14 auf, mit dem die Welle 5 an weitere Objekte, beispielsweise eine Welle 5 für einen Propeller, belastbar montiert werden kann. Um eine große Stabilität der Welle 5 zu gewährleisten, sind die Welle 5 und die Flansche 14 aus einem Stück gefertigt. Beispielsweise wird die Welle 5 mit den Flanschen 14 gedreht und anschließend nachbearbeitet. Eine aus einem Stück gefertigte Welle 5 mit Flanschen 14 an ihren axialen Enden ist auch bei sehr hoher Beanspruchung, beispielsweise bei hohen Drehmomenten und/oder schnellen Drehmomentänderungen, sehr stabil. Alternativ können die Flansche 14 beidseitig nahezu unlösbar fest, beispielsweise über eine Schrumpfverbindung oder über eine Schweißverbindung, mit der Welle 5 verbunden sein.

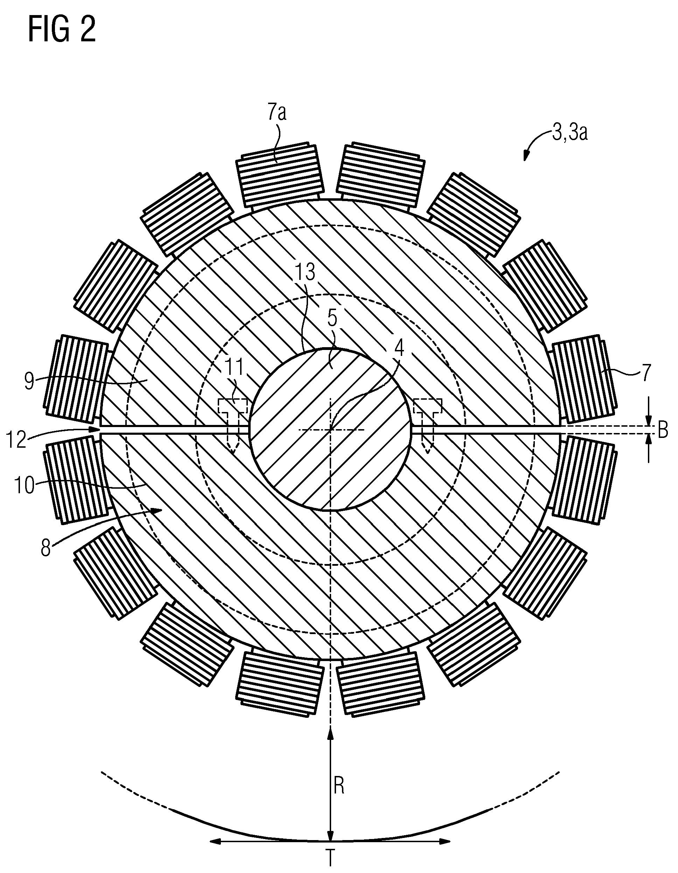

FIG 2 zeigt einen Querschnitt einer ersten Ausführungsform eines Rotors 3. Der Rotor 3 ist als Synchronläufer 3a ausgeführt und weist exemplarisch 16 identische Pole 7 auf, die sich auf dem Rotorelement 8 befinden und zueinander den gleichen Abstand aufweisen. Das Rotorelement 8 ist in exemplarisch zwei gleich große Rotorelementsektoren 9, 10 aufgeteilt, wobei sich an jedem Rotorelementsektor 9, 10 jeweils acht Pole 7 befinden. Die beiden Rotorelementsektoren 9, 10 sind über stufenlos justierbare Verbindungselemente 11, insbesondere Schrauben, miteinander verbunden. Durch Einschrauben der Verbindungselemente 11 ziehen sich die Rotorelementsektoren 9, 10 zusammen wodurch sich die Breite B des Spalts 12 verringert. Durch das Zusammenziehen erhöht sich der lokale Anpressdruck der Rotorelementsektoren 9, 10 auf die Welle 5 in radiale Richtung R. Durch eine derartige über den Umfang der Welle ungleichmäßig verteilte Flächenpressung bildet sich eine kraftschlüssige Verbindung 13 in Form einer Klemmverbindung aus. Zur Erhöhung des Reibschlusses ist eine Beschichtung der Kontaktflächen möglich. Die weitere Ausführung des Rotors 3 entspricht der Ausführung des Rotors 3 in FIG 1.

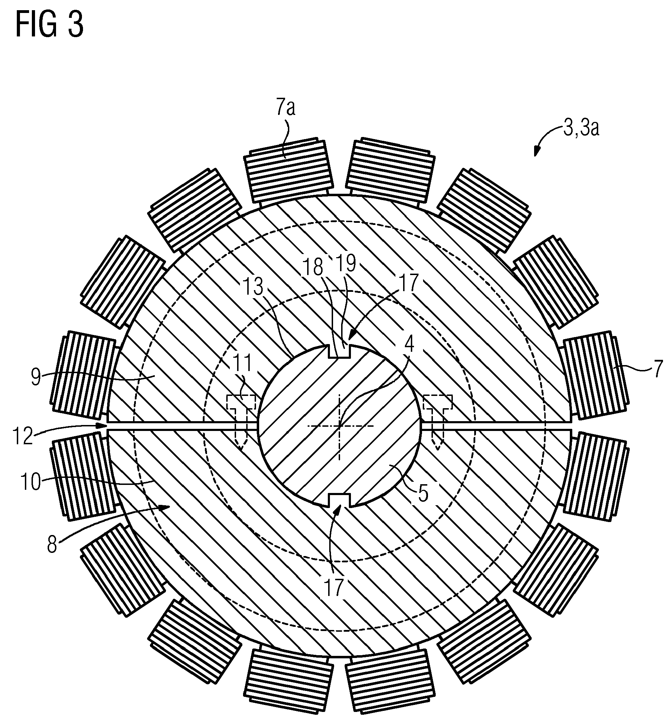

FIG 3 zeigt einen Querschnitt einer zweiten Ausführungsform eines Rotors 3. Zusätzlich zur oben beschriebenen Klemmverbindung weist das Rotorelement 8 eine formschlüssige Verbindung 17 mit der Welle 5 auf. Der erste Rotorelementsektor 9 und der zweite Rotorelementsektor 10 weisen jeweils eine erste Profilierung 18 auf. Alternativ wird eine Passfeder verwendet. Die Welle 5 weist eine zur ersten Profilierung 18 korrespondierende zweite Profilierung 19 auf, wobei die erste Profilierung 18 formschlüssig auf der korrespondierenden zweiten Profilierung 19 aufliegt. Die zweite Profilierung 19 ist als eine in axiale Richtung A verlaufende Nut ausgebildet, während die erste Profilierung 18 als ein zur zweiten Profilierung 19 passender Zahn ausgebildet ist. Die Nut und der Zahn können sich über die gesamte axiale Länge des Rotorelements 8 oder nur über einen Teil des Rotorelements erstrecken. Es kann auch nur der erste Rotorelementsektor 9 oder der zweite Rotorelementsektor 10 eine erste Profilierung 18 aufweisen. Mehrere Profilierungen 18, 19 pro Rotorelementsektor 8, 9 und andersartig ausgestaltete Profilierungen 18, 19 sind ebenfalls Gegenstand der Erfindung. Die weitere Ausführung des Rotors 3 entspricht der in FIG 2.

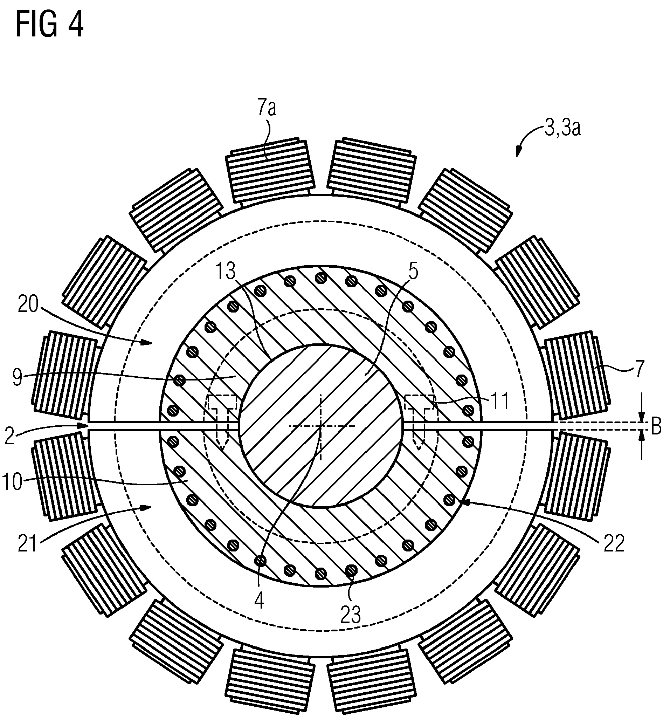

FIG 4 zeigt einen Querschnitt einer dritten Ausführungsform eines Rotors 3. Der als Synchronläufer 3a ausgeführte Rotor 3 weist erstes Polsegment 20 und ein zweites Polsegment 21 auf, wobei jedes Polsegment 20, 21 über eine Flanschverbindung 22 mit dem Rotorelement 8 verbunden ist. Das erste Polsegment 20 ist mit dem ersten Rotorelementsektor 9 verbunden und das zweite Polsegment 21 ist mit dem zweiten Rotorelementsektor 10 verbunden. Die Flanschverbindung 22 weist eine Vielzahl von Verbindungselementen 23 auf, die insbesondere als Schrauben und/oder Stifte ausgeführt sind. Durch die Flanschverbindung 22 findet eine gleichmäßige Kraftübertragung statt. Es lassen sich über die Flanschverbindung 22 Polsegmente 20, 21 mit einem Pol 7 oder mehreren Polen 7 mit dem Rotorelement 8 verbinden. Die Pole 7 können Rotorwicklungen 7a oder Permanentmagnete 7b aufweisen. Ein einteiliges kreisringförmiges Polsegment 20, 21, welches über eine Flanschverbindung 22 mit einem segmentierten Rotorelement 8 verbunden ist, ist ebenfalls Gegenstand der Erfindung. Die weitere Ausführung des Rotors 3 entspricht der in FIG 2.

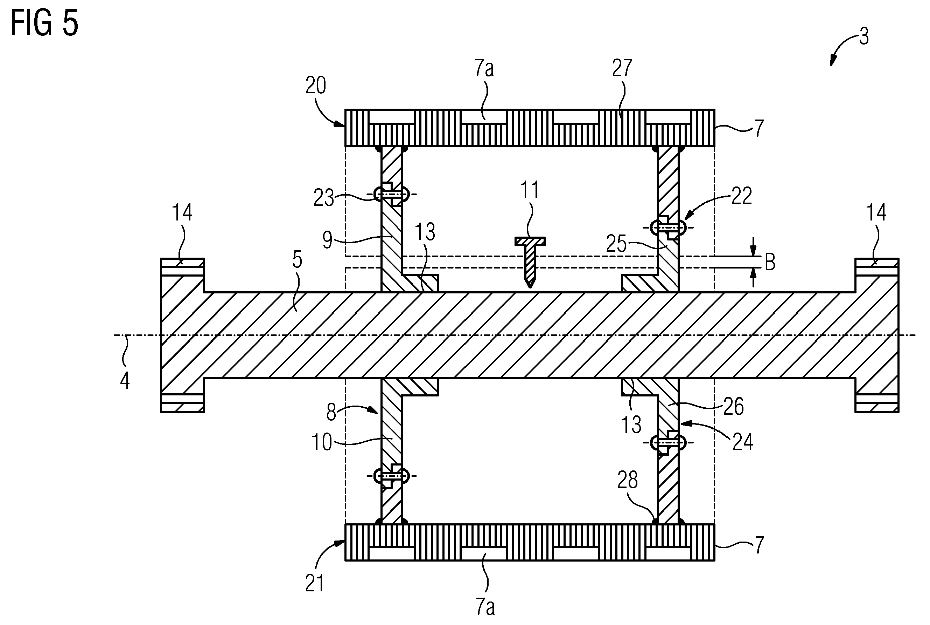

FIG 5 zeigt einen Längsschnitt einer vierten Ausführungsform eines Rotors 3, welcher als permanenterregter Synchronläufer 3a ausgeführt ist. Da es sich, im Vergleich zu FIG 4, um einen Rotor 3 mit axial längeren Polsegmenten 21, 22 handelt, weist der Rotor 3 ein weiteres Rotorelement 24 auf, welches in axiale Richtung A hinter dem Rotorelemente 8 über eine Klemmverbindung reibschlüssig mit der Welle 5 verbunden ist. Das weitere Rotorelement 24 weist einen dritten Rotorelementsektor 25 und einen vierten Rotorelementsektor 26 auf. Eine Ausgestaltung des weiteren Rotorelements 24 mit mehr als zwei Rotorelementsektoren 25, 26 ist ebenfalls Gegenstand der Erfindung. Die Pole 7 weisen Permanentmagnete 7a auf, welche in einem Blechpaket 27 befestigt sind. Insbesondere sind die Permanentmagnete 7a in axiale Richtung A durchgängig ausgeführt. Das Blechpaket 27 ist über eine Schweißverbindung 28 am jeweiligen Polsegment 21, 22 stoffschlüssig verbunden. Alterativ sind die Polsegmente 20, 21 in das Blechpakte 27 eingearbeitet und sind somit Teil des Blechpaketes 27, sodass keine Verbindung erforderlich ist. Die weitere Ausführung des Rotors 3 entspricht der in FIG 4.

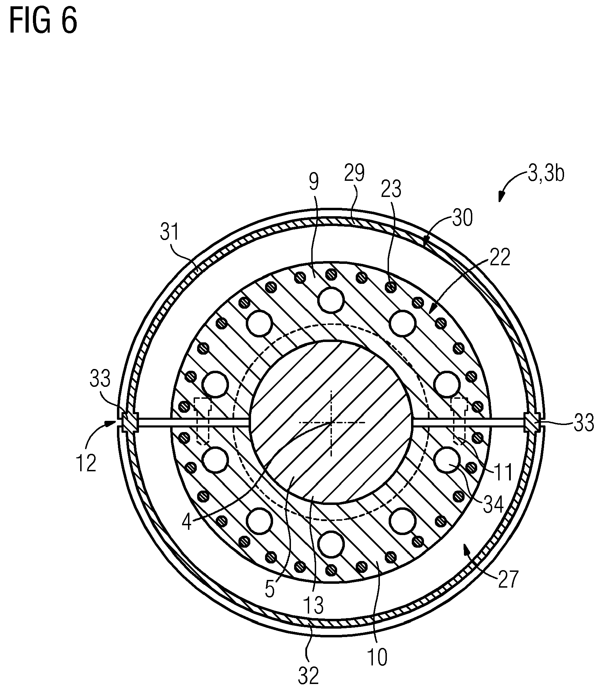

FIG 6 zeigt einen Querschnitt einer fünften Ausführungsform eines Rotors 3, welcher als Asynchronläufer 3b ausgeführt ist. Exemplarisch zwei segmentierte Blechpakete 27 weisen jeweils einen Teil eines Kurzschlussrings 29 für einen Käfig 30 des Asynchronläufers 3b auf, welche als zwei gleich große Sektoren 31, 32 ausgeführt sind. Sind die zwei Sektoren 31, 32 des Kurzschlussrings 29 des Käfigs 30 gleich groß so werden sie auch Halbringe genannt. Die Halbringe sind über Verbindungslaschen 33 miteinander verbunden und damit elektrisch kurzgeschlossen. Zum Käfig zugehörige bevorzugt in axiale Richtung verlaufende Stäbe, welche zwischen mindestens zwei axial hintereinander angeordneten Kurzschlussringen 29 angeordnet sind und jeweils mit beiden Kurzschlussringen 29 elektrisch kontaktiert sind, sind nicht dargestellt, sind aber ebenfalls Gegenstand der Erfindung. Die Stäbe sind bevorzugt ebenfalls im Blechpaket 27 angeordnet. Der Käfig 30 besteht bevorzugt aus Kupfer während das Blechpaket aus einem bevorzugt weichmagnetischen Stahl gefertigt ist.

Die Blechpakete sind über eine Flanschverbindung 22 mit den Rotorelementsektoren 9, 10 des Asynchronläufers 3b verschraubt. Alternativ zur Flanschverbindung 22 kann ein Spannbolzen des Blechpakets 27 zur Anbindung der Rotorelementsektoren 9, 10 an das Blechpaket 27 verwendet werden. Durch die Rotorelementsektoren 9, 10 verlaufen Kühlmittelöffnungen 34, durch welche ein Kühlmittel, bevorzugt ein Fluid, geleitet wird, welches dafür vorgesehen ist zumindest den Käfig 30 mit dem Blechpaket 27 zu kühlen. Ferner weist das Blechpaket 27 radial verlaufende Kühlschlitze auf.

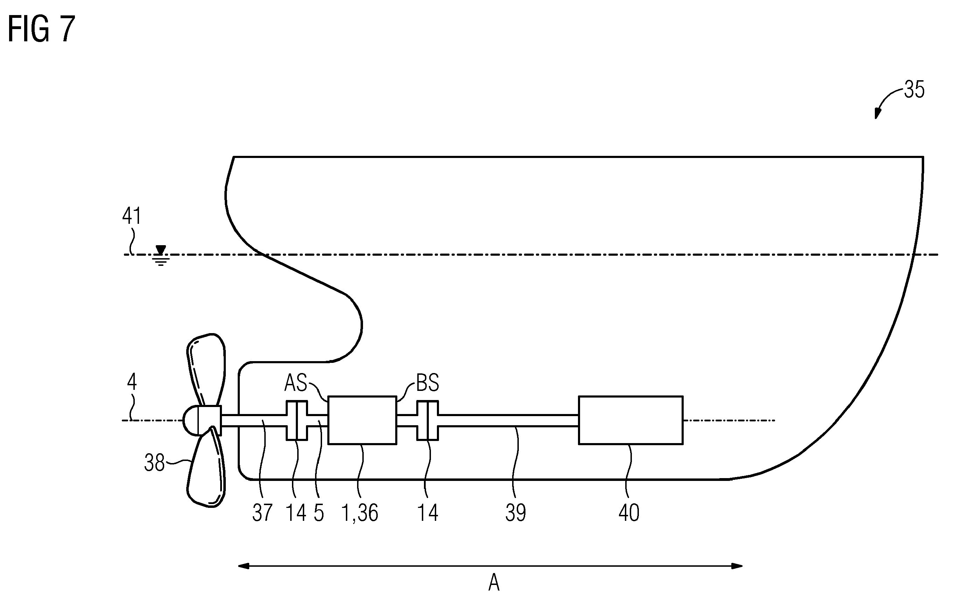

FIG 7 zeigt ein Schiff 35 mit einer elektrischen rotierenden Maschine 1. Die elektrische rotierende Maschine 1 ist als Booster-Antrieb 36 mit einer Leistung von mindestens einem Megawatt ausgeführt und kann sowohl als Motor als auch als Generator genutzt werden. Die Welle 5 des Booster-Antriebs 36 ist an einer Antriebsseite AS über einen Flansch 10, welcher wie in FIG 1 gezeigt und beschrieben ausgeführt ist, mit einer Propellerwelle 37 eines Propellers 38 verbunden, welcher den Schub für das Schiff 30 erzeugt. An einer Nichtantriebsseite BS ist der Booster-Antrieb 36 über einen Flansch 10 mit einer Hauptmaschinenwelle 39 einer Hauptmaschine 40 verbunden. So kann der Booster-Antrieb 36 bei Bedarf die Leistung der Hauptmaschine 40 erhöhen oder im Generatorbetrieb aus einem Teil der Antriebsleistung Strom generieren. Die Welle 5 des Booster-Antriebs 36 ist im Verhältnis klein gegenüber der Propellerwelle 37 und der Hauptmaschinenwelle 39. Daher kann der Booster-Antrieb 36 durch die beidseitig angeordneten Flansche 10 seiner Welle 5 flexibel zwischen dem Propeller 38 und der Hauptmaschine 40 des Schiffes 31 eingefügt werden. Da die Propellerwelle 37 zusammen mit der Hauptmaschinenwelle 39 in der Regel sehr lang sind, beispielsweise im Bereich von 50 bis 100 m, sind diese häufig in Teilwellen mit Flanschen unterteilt. Der Booster-Antrieb 36 kann flexibel zwischen dem Propeller 38 und der Hauptmaschine 40 angeordnet werden. Neben dem Propeller 38 befinden sich auch der Boosterantrieb 36 und die Hauptmaschine 40 unter einer Wasseroberfläche 41.

## Patentansprüche

1. Rotor (3) für eine elektrische rotierende Maschine (1), welcher eine Welle (5) und ein die Welle (5) umgebendes Rotorelement (8) aufweist,
**dadurch gekennzeichnet, dass**
das Rotorelement (8) mindestens zwei Rotorelementsektoren (9, 10) umfasst,
wobei die Rotorelementsektoren (9, 10) miteinander verbunden sind und
wobei durch die Verbindung der Rotorelementsektoren (9, 10) eine kraftschlüssige Verbindung (13) zwischen dem Rotorelement (8) und der Welle (5) herstellt wird.

2. Rotor (3) nach Anspruch 1,
wobei die kraftschlüssige Verbindung (13) als Klemmverbindung ausgebildet ist.

3. Rotor (3) nach einem der Ansprüche 1 oder 2,
wobei die mindestens zwei Rotorelementsektoren (9, 10) lösbar miteinander verbunden sind.

4. Rotor (3) nach einem der vorherigen Ansprüche,
wobei die mindestens zwei Rotorelementsektoren (9, 10) über Verbindungselemente (11) miteinander verbunden sind.

5. Rotor (3) nach einem der vorherigen Ansprüche,
wobei zwischen den Rotorelementsektoren (9, 10) ein Spalt (12) ausgebildet ist.

6. Rotor (3) nach Anspruch 5,
wobei der Spalt (12) eine Breite (B) von 1 bis 5 mm aufweist.

7. Rotor (3) nach einem der vorherigen Ansprüche,
wobei jeder Rotorelementsektor (9, 10) unmittelbar mit der Welle (5) kontaktiert ist.

8. Rotor (3) nach einem der vorherigen Ansprüche,
wobei zumindest ein Rotorelementsektor (9, 10) und/oder die Welle (5) Mittel zur Herstellung einer formschlüssigen Verbindung (17) zwischen dem Rotorelement (8) und der Welle (5) aufweisen.

9. Rotor (3) nach Anspruch 8,
wobei die Mittel zur Herstellung der formschlüssigen Verbindung (17) zwischen dem Rotorelement (8) und der Welle (5) als Profilierungen (18, 19) ausgebildet sind.

10. Rotor (3) nach Anspruch 9,
wobei der Rotorelementsektor (13, 14) eine erste Profilierung (18) aufweist und die Welle (5) eine zweite Profilierung (19) aufweist,
wobei die erste Profilierung (18) formschlüssig auf der korrespondierenden zweiten Profilierung (19) aufliegt.

11. Rotor (3) nach einem der vorherigen Ansprüche,
wobei jeder Rotorelementsektor (9, 10) zumindest einen Pol (7) eines Synchronläufers (3a) aufweist.

12. Rotor (3) nach Anspruch 11,
wobei jeweils mindestens ein Pol (7) über eine Flanschverbindung (22) mit einem Rotorelementsektor (9, 10) verbunden ist.

13. Rotor (3) nach einem der Ansprüche 1 bis 10,
wobei jeder Rotorelementsektor (9, 10) einen Teil eines Käfigs (30) eines Asynchronläufers (3b) aufweist.

14. Rotor (3) nach einem der vorherigen Ansprüche,
wobei die Welle (5) an mindestens einem axialen Ende einen Flansch (14) aufweist,
wobei ein Flanschdurchmesser (15) größer als ein Außendurchmesser (16) der Welle (5) ist.

15. Rotor (3) nach Anspruch 14,
wobei die Welle (5) und der mindestens eine Flansch (14) aus einem Stück gefertigt sind.

16. Rotor (3) nach Anspruch 14,
wobei der mindestens eine Flansch (14) unlösbar fest mit der Welle (5) verbunden ist.

17. Elektrische rotierende Maschine (1) mit einem Rotor (3) nach einem der Ansprüche 1 bis 16.

18. Schiff (35) mit mindestens einer elektrischen rotierenden Maschine (1) nach Anspruch 17,
wobei die elektrische rotierende Maschine (1) dafür vorgesehen ist, als Motor und/oder Generator betrieben zu werden.

19. Schiff (30) nach Anspruch 18,
aufweisend einen Propeller (38) mit einer Propellerwelle (37) und eine Hauptmaschine (40) mit einer Hauptmaschinenwelle (39),
wobei die elektrische rotierende Maschine (1) an einer Antriebsseite (AS) über einen Flansch (14) mit der Propellerwelle (37) des Propellers (38) verbunden ist und
an einer Nichtantriebsseite (BS) über einen Flansch (14) mit der Hauptmaschinenwelle (39) der Hauptmaschine (40) verbunden ist.

20. Verfahren zur Herstellung eines Rotors (3) nach einem der Ansprüche 1 bis 16.
